# EUROPÄISCHE PATENTSCHRIFT

(11) **EP 2 877 368 B1**
(45) Veröffentlichungstag und Bekanntmachung des Hinweises auf die Patenterteilung: **01.04.2020**
(21) Anmeldenummer: 13739948.1
(22) Anmeldetag: 22.07.2013
(51) Int. Cl.: B60N 2/427, B60N 2/72

(54) **STÜTZVORRICHTUNG FÜR EINEN SITZ UND DAMIT AUSGERÜSTETER FAHRZEUGSITZ**
SUPPORTING DEVICE FOR A SEAT AND VEHICLE SEAT EQUIPPED THEREWITH
DISPOSITIF DE SUPPORT POUR UN SIÈGE ET SIÈGE DE VÉHICULE ÉQUIPÉ DE CELUI-CI

(30) Priorität: 25.07.2012 DE 102012014667
(43) Veröffentlichungstag der Anmeldung: 03.06.2015
(73) Patentinhaber: Adient Luxembourg Holding S.à r.l., 1855 Luxembourg (LU)
(72) Erfinder: RUCKRIEGEL, Thomas, 98716 Geraberg (DE)
(74) Vertreter: Siekmann, Gunnar
(86) Internationale Anmeldenummer: PCT/EP2013/002167
(87) Internationale Veröffentlichungsnummer: WO 2014/015971

(56) Entgegenhaltungen:
- WO-A1-2012/066275
- DE-A1- 4 421 946
- US-A1- 2008 185 884
- US-A1- 2011 043 008

## Beschreibung

Die Erfindung bezieht sich auf eine Stützvorrichtung für einen Sitz, insbesondere einen Fahrzeugsitz, umfassend zumindest ein flächiges Stützteil und mehrere am Stützteil angeordnete Befestigungsmittel, wobei das Stützteil mindestens einen Ausdehnungsbereich für eine Ausdehnung in wenigstens eine Richtung in der Flächenebene des Stützteiles aufweist.

Es sind Stützvorrichtungen bekannt, die beispielsweise an Sitzkissen- oder Lehnenhinterfederungen von Fahrzeugsitzen zum Einsatz kommen und mittels denen ein Sitz- oder Lehnenpolster von der Unter- bzw. Rückseite aus gestützt wird. Die insbesondere an den Sitzkissen und Lehnen eines Fahrzeugsitzes eingesetzten Stützvorrichtungen haben dabei einen wesentlichen Einfluss auf die Federwirkung des Sitzes sowohl während der normalen Fahrsituationen als auch bei möglichen auftretenden extremen Belastungsfällen, wie zum Beispiel einem Heckanstoß des Fahrzeuges.

Nach der WO 2009/012844A1 ist eine solche Stützvorrichtung bekannt, die wenigstens ein flächiges Stützteil aufweist, mit Hilfe dem das Sitz- oder Lehnenpolster von der Unter- bzw. Rückseite aus gestützt wird. Am Stützteil sind üblicherweise mehrere Befestigungsmittel angeordnet, über die eine Verbindung des Stützteiles mit einem Rahmengestell des Sitzteiles hergestellt ist. Die Befestigungsmittel sind in der Regel als Verbindungsdrähte ausgebildet, die mit ihren Enden jeweils in vorbestimmte Aufnahmen am Rahmengestell des Sitz- oder Lehnenteiles eingehängt werden. Das Stützteil ist mit Ausdehnungsbereichen für eine Ausdehnung in wenigstens eine Richtung in Flächenebene des Stützteiles ausgerüstet, um insbesondere in normalen Fahrsituationen und möglichen extremen Belastungssituationen allgemein die Federwirkung des Stützteiles selbst zu erhöhen. Die bekannte Stützvorrichtung weist diesbezüglich an seinem Stützteil in vorbestimmten Flächenbereichen aus der Flächenebene vorstehende Sicken auf, die in jedem beliebigen Belastungsfall eine Streckung des Stützteiles in der Flächenebene um ein vorbestimmtes Maß zulassen. Die als Ausdehnungsbereich am Stützteil ausgebildeten Sicken werden dabei stets dauerhaft belastet, was gegebenenfalls zu einer Ermüdung des Materials im Ausdehnungsbereich und damit, bezogen auf die Langzeitfunktion, zu einer reduzierten Stütz- und Federwirkung der Stützvorrichtung am Polsterteil führen kann.

Aus der JP 2007-038810 A1 ist ein Fahrzeugsitz bekannt. Der Fahrzeugsitz ist beweglich konstruiert, so dass im Fall eines Frontalzusammenstoßes der Sitz nach vorne bewegt wird und dabei der vordere zentrale Teil des Sitzkissens höher wird als die seitlichen rechten und linken Teile des Sitzkissens.

Aus der DE 10 2005 002 681 A1 ist ebenfalls ein Sitzkissen eines Fahrzeugsitzes bekannt, bei dem eine Sitzwanne vorhanden ist, die einen Polsterkörper aus Schaumstoff trägt. Die Sitzwanne weist Verhakungsmittel auf, die in den Polsterkörper hineinragen. Dadurch wird ein Nachvornrutschen des Polsterkörpers auf der Sitzwanne im Fall starker Verzögerungen des Fahrzeuges vermieden.

WO 2012/066275 A1 offenbart einen Sitz der Kräfte absorbieren soll, denen der Sitz beispielsweise bei einer Minenexplosion oder bei einem Aufprall eines den Sitz aufweisenden Flugzeugs oder Hubschraubers ausgesetzt ist. Der Sitz weist übereinander gefaltete Lagen auf, die mittels einer Haltevorrichtung bei normaler Belastung zusammengehalten werden. Die Haltevorrichtung weist insbesondere eine Blindniete auf. Ab einer bestimmten Belastung enfalten sich die übereinander gefalteten Lagen.

US 2011/0043008 A1 offenbart einen Energie absorbierenden Sitz mit einer Vielzahl von mit Abstand zueinander angeordneten Stützvorrichtungen. Bei einer Ausführungsform sind bei jeder Stützvorrichtung übereinander gefaltete Lagen mittels Abreißverbindungen miteinander verbunden. Bei einer hierzu alternativen, gattungsgemäßen Ausführungsform gemäß Figur 8 der US 2011/0043008 A1 weist jede Stützvorrichtung stegartige Flächenabschnitte mit Ausdehnungsbereichen auf. Bei diesen bekannten Stützvorrichtungen sind die Ausdehnungsbereiche und damit Abreißbereiche in separaten Flächenstücken ausgebildet, welche mit einem durchgehenden Streifen verbunden sind und diesen durchgehenden Streifen im Ausdehnungsbereich gerafft zusammenhalten.

DE 10 2007 006 013 A1 offenbart einen Sicherheitssitz für Fahrzeuge. Der Sicherheitssitz weist eine zusätzliche verstellbare Rückenlehne auf. Die Lage von Rückenlehnenteilen der Rückenlehne kann mittels einer Verstellvorrichtung eingestellt werden.

Der Erfindung liegt daher die Aufgabe zugrunde, eine Stützvorrichtung der vorbezeichneten Gattung dahingehend zu verbessern, dass eine verbesserte und zugleich betriebssichere Langzeitfunktion erreicht ist.

Die Lösung der Aufgabe erfolgt erfindungsgemäß durch eine Stützvorrichtung mit den Merkmalen des Patentanspruches 1. Vorteilhafte Weiterbildungen und Ausgestaltungen der Erfindung sind in den Ansprüchen 2 bis 9 angegeben.

Bei einer Stützvorrichtung für einen Sitz, insbesondere einen Fahrzeugsitz, umfassend zumindest ein flächiges Stützteil und mehrere am Stützteil angeordnete Befestigungsmittel, wobei das Stützteil mindestens einen stegartigen Flächenabschnitt aufweist und wobei das Stützteil mindestens einen als Solltrennstelle in einem jeweiligen stegartigen Flächenabschnitt ausgebildeten Ausdehnungsbereich für ein Nachgeben der jeweiligen Solltrennstelle in Richtung der Ausdehnung des jeweiligen stegartigen Flächenabschnittes und dadurch für eine Ausdehnung des Stützteiles in wenigstens eine Richtung in der Flächenebene des Stützteiles aufweist, ist nach der Erfindung vorgesehen, dass das flächige Stützteil einteilig ausgebildet ist und mehrere die Flächenebene durchdringende Durchbrüche aufweist, wobei, mittels jeweils zweier zueinander benachbarter Durchbrüche jeweils mindestens einer der stegartigen Flächenabschnitte des Stützteiles in der Flächenebene des Stützteiles ausgebildet ist.

Mit Hilfe eines als Solltrennstelle ausgebildeten Ausdehnungsbereiches lässt sich eine vorteilhaft betriebssichere Langzeitfunktion des Stützteiles und damit der gesamten Stützvorrichtung unterhalb eines Sitzpolsters bzw. hinter einem Lehnenpolster eines Sitzes gewährleisten. Die Solltrennstelle ist dabei in einem stegartigen Flächenabschnitt des Stützteiles ausgebildet, über dem bereits grundsätzlich eine vorteilhafte Federwirkung am Stützteil bewirkt ist. Die Solltrennstelle im Stützteil ist derart bemessen, dass sich die während allgemeiner Fahrsituationen auftretenden üblichen Kräfte und Belastungen problemlos aufnehmen lassen. Über die wenigstens eine Solltrennstelle können zum Beispiel Kräfte von etwas mehr als 1000 Newton verteilt über die Fläche des Sitzteiles aufgefangen werden. Erst wenn, in zum Beispiel einem außergewöhnlichen Belastungsfall, wie einem Heckanstoß oder dergleichen, die wirkenden Kräfte über einen vorbestimmen Wert von etwa 1500 bis 1600 Newton ansteigen, gibt die Solltrennstelle nach. Ein sich auf dem Sitz befindlicher Insasse erhält dadurch in seinem Rückenbereich eine größere Bewegungsfreiheit, insbesondere senkrecht zur Ebene des Stützteiles, wodurch automatisch der Abstand seines Kopfes zur Kopfstütze des Sitzes verringert ist. Die Solltrennstelle ist insbesondere in einem stegartigen Flächenabschnittausgebildet, der sich in einer beliebigen Richtung in der Flächenebene des Stützteiles erstrecken kann.

Bevorzugt weist das Stützteil eine Vielzahl von Solltrennstellen in vorbestimmten stegartigen Flächenabschnitten auf. Die Flächenabschnitte mit ihren Solltrennstellen können dabei eine vorbestimmte Anordnung verteilt über den Flächenbereich des Stützteiles aufweisen, wobei eine gezielte bzw. gerichtete Ausdehnung des Stützteiles in zumindest eine Richtung in der Flächenebene des Stützteiles vorgesehen ist. In diesem Zusammenhang ist es zum Beispiel denkbar, dass die Solltrennstellen speziell in den stegartigen Flächenabschnitten des Stützteiles ausgebildet sind, die ihre bevorzugte Ausrichtung in Richtung wenigstens einer der Hauptachsen des Stützteiles haben. Im Falle einer Überlast und dem damit verbundenen Nachgeben der Solltrennstellen am Stützteil streckt sich dann das insbesondere etwa eine Rechteckform aufweisende Stützteil in eine seiner Hauptachsen. Die weiterhin intakt bleibenden, häufig ebenfalls stegartigen Flächenbereiche werden gegebenenfalls übermäßig belastet, so dass sich an diesen eine verstärkt elastische oder plastische Verformung ergibt und dadurch eine vergrößerte Federwirkung senkrecht zur Flächenebene des Stützteiles einstellt. Die Solltrennstellen im Stützteil können dabei derart angeordnet bzw. ausgebildet sein, dass es ab einer bestimmten Größe der Belastung sogar zur vollständigen Teilung des Stützteiles in wenigstens zwei Flächenteile kommen kann.

Mindestens einem stegartigen Flächenabschnitt mit einer Solltrennstelle ist wenigstens ein Ausdehnungsbegrenzer zugeordnet, der zu beiden Seiten der Solltrennstelle mit dem jeweiligen Flächenabschnitt des Stützteiles verbunden ist. Der Einsatz eines Ausdehnungsbegrenzers verhindert insbesondere eine übermäßige Streckung des Stützteiles und wirkt damit einem vollständigen Versagen der Stützvorrichtung entgegen. Mit einer derartig erfindungsgemäß ausgebildeten Stützvorrichtung ist die maximal mögliche Ausdehnung des Stützteiles wirkungsvoll begrenzt, so dass mit Vorteil ein stets sicherer Halt eines Insassen über beispielsweise ein Lehnenteil eines Sitzes gewährleistet ist. Der Ausdehnungsbegrenzer kann unter anderem eine im Bereich der Solltrennstelle angeordnete, flexible Faserstruktur sein. Bei intakter Solltrennstelle bildet die Faserstruktur an einer Fläche des Stützteiles eine locker ausgebildete Schlinge aus.

Bevorzugt ist der Ausdehnungsbegrenzer ein Abschnitt einer aus der Flächenebene des Stützteiles hervorstehenden Sicke, die insbesondere fester Bestandteil des Stützteiles ist. Mit der Ausbildung eines aus der Flächenebene des Stützteiles vorstehenden Sickenabschnittes ist eine konstruktiv vorteilhafte Möglichkeit zur Ausbildung eines Ausdehnungsbegrenzers geschaffen. Ein solcher Sickenabschnitt weist bevorzugt einen kurven- bzw. bogenförmigen Verlauf auf und hat ähnlich flexible Eigenschaften wie die etwa ebene Flächenstruktur des Stützteiles. Damit ist speziell nach dem Versagen der Solltrennstelle, ein vorteilhaftes Nachgeben des Ausdehnungsbegrenzers und damit ein Strecken des Stützteiles in wenigstens einer Richtung in Flächenebene ermöglicht. Jeder Sickenabschnitt ist fest und insbesondere einteilig mit der vornehmlich ebenen Flächenstruktur des Stützteiles ausgebildet.

Das Stützteil weist seine Flächenebene durchdringende Durchbrüche auf, wobei mittels zweier zueinander benachbarter Durchbrüche mindestens einer der stegartigen Flächenabschnitte des Stützteiles ausgebildet ist. Mit Hilfe der das Stützteil insbesondere senkrecht durchdringenden Durchbrüche ist eine vorteilhafte Möglichkeit der Ausgestaltung der stegartigen Flächenabschnitte zwischen den benachbarten Durchbrüchen in der ebenen Flächenstruktur des Stützteiles gewährleistet. In Abhängigkeit von der Anzahl bzw. der Abmessungen eines jeweiligen Durchbruches wird ebenfalls die Anzahl und die Ausgestaltung der stegartigen Flächenabschnitte bestimmt. Damit lässt sich mit Vorteil zudem die Federwirkung des Stützteiles beeinflussen. Die Durchbrüche weisen vorzugsweise eine rautenförmige oder elliptische Formgebung auf, mittels denen sich eine Stützteilstruktur erzeugen lässt, die eine vorteilhaft gleichmäßige Federwirkung über die gesamte Flächenebene des Stützteiles aufweist.

Nach einer Weiterbildung der Erfindung ist vorgesehen, dass die Befestigungsmittel der Stützvorrichtung, mit Hilfe denen die Stützvorrichtung mit einem Rahmen oder Rahmengestell eines Sitzes verbunden ist, einteilig mit dem Stützteil ausgebildet sind. Vorzugsweise sind die Befestigungsmittel aus demselben Material ausgebildet, wie das Stützteil, was die Herstellung der erfindungsgemäßen Stützvorrichtung auf vorteilhafte Weise vereinfacht. Die bevorzugt unmittelbar an der Flächenstruktur des Stützteiles ansetzenden Befestigungsmittel sind beispielsweise als Halte- oder Verankerungsarme ausgebildet. Die Befestigungsmittel erstrecken sich dabei direkt in Flächenebene des Stützteiles von dessen Peripherie aus, insbesondere in einem rechten Winkel zur Randkante des Stützteiles, nach außen. Es ist jedoch ebenfalls denkbar, anstelle der einteilig mit dem Stützteil ausgebildeten Befestigungsmittel separate Verbindungs- oder Verankerungsdrähte vorzusehen, die über entsprechende Halterungen mit der Rückseite des Stützteiles verbunden sind.

Bevorzugt sind die Befestigungsmittel an gegenüberliegenden Längsrändern des Stützteiles angeordnet, wodurch eine feste und zugleich sichere Verbindung zum Rahmen bzw. Rahmengestell eines Sitzteiles geschaffen ist. Die Befestigungsmittel erstrecken sich vorzugsweise nur an zwei der sich einander gegenüberliegenden Längsränder eines zum Beispiel etwa eine Rechteckform aufweisenden Stützteiles. Durch die zum Beispiel als Haltearme auf nur zwei Seiten des Stützteiles angeordneten Befestigungsmittel ist stets eine optimale Federwirkung gewährleistet, die bei möglichen auftretenden extremen Belastungsfällen, durch die sich aus dem Versagen der Solltrennstellen ergebende, zusätzliche Streckung des Stützteiles, weiter verbessert ist.

Die Befestigungsmittel sind mit Verrastteilen für eine Formschlussverbindung mit einem Rahmen eines Sitzes ausgerüstet, wodurch sich zum einen eine positionsgenaue und zum anderen eine feste Verbindung mit dem Rahmen erzeugen lässt. Das Befestigungsmittel kann an seinem Ende beispielsweise klammer- bzw. hakenartig ausgebildet sein und vorbestimmte Rahmenbereiche des Rahmens umgreifen oder in Aufnahmen am Rahmen eingreifen. Zudem kann mindestens ein Befestigungsmittel mit einem senkrecht vorstehenden Dorn ausgerüstet sein, der in zum Beispiel eine Vertiefung am Rahmengestell eingreift und mittels dem eine direkte Verrastfunktion umgesetzt ist. Über eine derartige Verrastfunktion ist beispielsweise eine vorteilhafte Fixierung der erfindungsgemäßen Stützvorrichtung in der Höhe am Rahmengestell möglich. Es ist ebenfalls denkbar, dass die Befestigungsmittel in ihren sich nach außen erstreckenden Haltearmen ösenartige Materialausnehmungen aufweisen, die zum Beispiel mit am Rahmen des Sitzes vorstehenden Hakenteilen eine Formschlussverbindung ausbildend in haltende Wirkverbindung bringbar sind. Die Befestigungsmittel können zu diesem Zweck beispielsweise elastische Eigenschaften für eine Verformbarkeit aufweisen, wodurch sich das Befestigungsmittel an vorbestimmte Konturen des Rahmengestelles anpassen bzw. anlegen lässt.

Der Werkstoff für das Stützteil und die insbesondere daran einteilig ausgebildeten Befestigungsmittel ist ein sortenreiner Kunststoff, dessen Anwendung sich zur Ausbildung zumindest des Stützteiles bewährt hat. Als Kunststoff kommt beispielsweise Polyethylen, Polypropylen oder ähnliches zur Anwendung. Der zum Einsatz kommende Kunststoff hat darüber hinaus den Vorteil, dass er entsprechend elastische Eigenschaften zur Umsetzung zum Beispiel der grundlegenden Federwirkung und der zusätzlichen Nachgiebigkeit der Ausdehnungsbereiche ermöglicht. Zudem zeichnet sich das eingesetzte Material durch seine vorteilhafte Korrosionsbeständigkeit aus.

Einen weiteren Aspekt der Erfindung betrifft einen Sitz, insbesondere einen Fahrzeugsitz, mit zumindest einem Sitzkissen und einem Lehnenteil, wobei wenigstens das Sitzkissen oder das Lehnenteil jeweils mit wenigstens einem Polsterteil und einer das Polsterteil stützenden Stützvorrichtung nach einem der vorhergehenden Ansprüche ausgerüstet sind.

Mit Hilfe einer derartig erfindungsgemäß ausgebildeten Stützvorrichtung ist eine vorteilhaft verbesserte Nachgiebigkeit der Stützvorrichtung bei extremen Belastungsfällen, wie zum Beispiel einem Heckanstoß an einem Fahrzeug gewährleistet. Dadurch ergibt sich insbesondere eine vergrößerte Bewegungsfreiheit für einen sich auf dem Sitz befindlichen Insassen in Richtung des Lehnenteiles des Sitzes, so dass sich der Abstand zwischen dem Kopf und der Kopfstütze automatisch verringert. Die an der Stützvorrichtung ausgebildeten Befestigungsmittel lassen sich für eine vorteilhaft einfache Befestigung der Stützvorrichtung am Rahmen bzw. Rahmengestell eines Sitzkissens oder Lehnenteiles mit Vorteil um ein vorbestimmtes Maß verformen. Ein jeweiliges Befestigungsmittel kann beispielsweise mit einer Materialausnehmung ausgerüstet sein, wodurch Bereiche des Befestigungsmittels hinter hakenartig an der Rahmenoberfläche vorstehenden Vorsprüngen am Rahmen bzw. Rahmengestell eingreifen.

Ein Ausführungsbeispiel der erfindungsgemäßen Stützvorrichtung, aus dem sich weitere erfinderische Merkmale ergeben, ist in der Zeichnung dargestellt. Es zeigen:
- Fig. 1:: eine Ansicht der erfindungsgemäßen Stützvorrichtung;
- Fig. 2:: eine Ansicht der Stützvorrichtung nach Fig. 1 im Schnitt;
- Fig. 3:: eine perspektivische Ansicht eines Befestigungspunktes am Rahmen eines Sitzes, und
- Fig. 4:: eine Ansicht eines weiteren Befestigungspunktes am Rahmen.

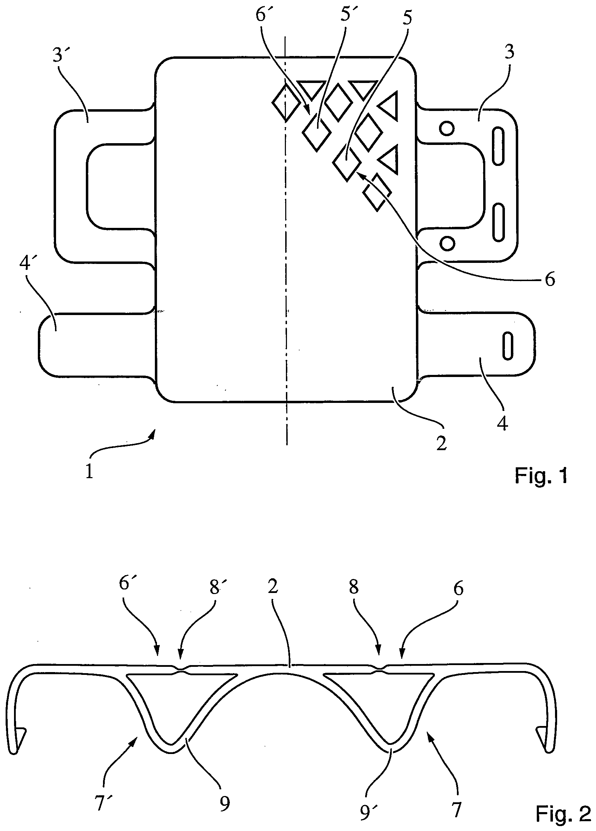

Mit 1 ist eine Stützvorrichtung bezeichnet, die ein Stützteil 2 und am Stützteil 2 angeordnete Befestigungsmittel 3, 3', 4, 4' aufweist. Das Stützteil 2 und die daran angeordneten Befestigungsmittel sind einteilig aus einem Kunststoffmaterial ausgebildet. Das Stützteil 2 weist eine Vielzahl seine Flächenebene senkrecht durchdringende Durchbrüche 5, 5' auf, wobei zwischen zwei zueinander benachbarten Durchbrüchen stegartige Flächenabschnitte 6, 6' erzeugt sind. Die Durchbrüche 5, 5' weisen im gezeigten Ausführungsbeispiel eine Rautenform auf, können jedoch jede andere beliebige Form haben, wie zum Beispiel eine Ellipsenform. Vorbestimmte zwischen den Durchbrüchen verlaufende Flächenabschnitte 6, 6', die in der Flächenebene des Stützteiles verlaufen, weisen einen Ausdehnungsbereich 7, 7' auf. Jeder Ausdehnungsbereich 7, 7' ist mit einer Solltrennstelle 8, 8' (Fig. 2) ausgerüstet. Bei auftretenden, extremen Belastungsfällen, wie zum Beispiel einem Heckstoß an einem Fahrzeug, versagen die Solltrennstellen 8, 8', wodurch eine Ausdehnung bzw. Streckung des Stützteiles in mindestens eine Richtung in seiner Flächenebene bewirkt ist.

Wie die Fig. 2 zeigt, ist jeder Solltrennstelle 8, 8' ein abschnittsweise an der bevorzugt ebenen Flächenstruktur des Stützteiles 2 hervorstehender Ausdehnungsbegrenzer 9, 9' zugeordnet, dessen Enden zu beiden Seiten der Solltrennstelle mit dem Stützteil verbunden sind. Jeder Ausdehnungsbegrenzer ist als Abschnitt einer kurvenförmig an der Flächenstruktur abstehenden Sicke unterhalb einer jeweiligen Solltrennstelle ausgebildet. In Fig. 2 sind die sich auf zwei Seiten des Stützteiles 2 angeordneten Befestigungsmittel 3, 3' abgewinkelt angeordnet.

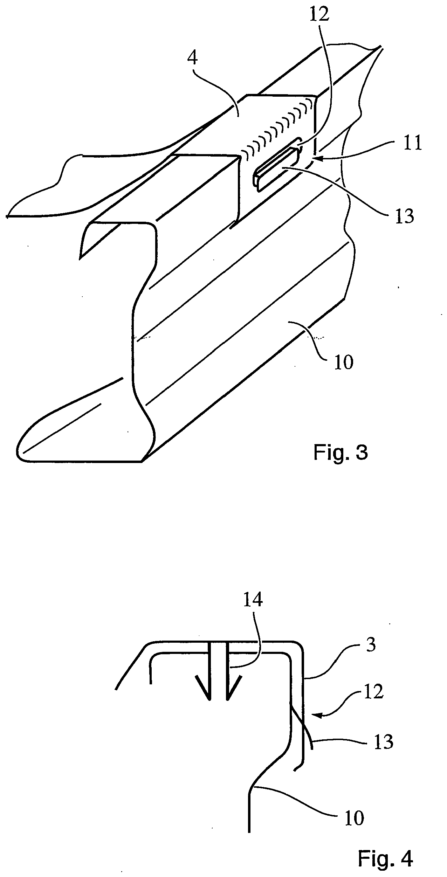

In Fig. 3 ist ein Abschnitt eines Rahmens 10 eines nicht näher dargestellten Sitzes abgebildet, an dem das als Haltearm ausgebildete Befestigungsmittel 4 über eine Formschlussverbindung 11 mit dem Abschnitt des Rahmens 10 befestigt ist. Zur Ausbildung der Formschlussverbindung 11 weist das Befestigungsmittel 4 ein als Materialausnehmung 12 ausgestaltetes Verrastteil auf, das mit einem hakenartigen Vorsprung 13 an der Außenseite des Rahmens 10 in haltende Wirkverbindung gebracht ist. Das mit dem Stützteil 2 einteilig ausgebildete Befestigungsmittel 4 ist verformbar und lässt sich somit um vorbestimmte Flächenbereiche des Rahmens 10 herumlegen.

Wie Fig. 4 zeigt, kann zusätzlich zu einer Materialausnehmung 12 wenigstens eines der Befestigungsmittel 3, 3', 4, 4' mit einer senkrecht am Befestigungsmittel 3 vorstehenden Dorn 14 ausgerüstet sein, der in eine Bohrung am Rahmen 10 eingreift und darüber eine vorteilhafte Ausrichtung der Stützvorrichtung 1 in ihrer Höhe am Rahmen 10 möglich ist.

### Bezugszahlenliste:

- 1: Stützvorrichtung
- 2: Stützteil
- 3,3': Befestigungsmittel
- 4,4': Befestigungsmittel
- 5,5': Durchbruch
- 6,6': Flächenabschnitt
- 7,7': Ausdehnungsbereich
- 8,8': Solltrennstellen
- 9,9': Ausdehnungsbegrenzer
- 10: Rahmen
- 11: Formschlussverbindung
- 12: Materialausnehmung
- 13: Vorsprung
- 14: Dorn

## Patentansprüche

1. Stützvorrichtung für einen Sitz, insbesondere einen Fahrzeugsitz, umfassend zumindest ein flächiges Stützteil (2) und mehrere am Stützteil (2) angeordnete Befestigungsmittel (3, 3', 4, 4'), wobei das Stützteil (2) mindestens einen stegartigen Flächenabschnitt (6, 6') aufweist und wobei das Stützteil (2) mindestens einen als Solltrennstelle (8, 8') in einem jeweiligen stegartigen Flächenabschnitt (6, 6') ausgebildeten Ausdehnungsbereich (7, 7') für ein Nachgeben der jeweiligen Solltrennstelle (8, 8') in Richtung der Ausrichtung des jeweiligen stegartigen Flächenabschnittes (6, 6') und dadurch für eine Ausdehnung des Stützteiles (2) in wenigstens eine Richtung in der Flächenebene des Stützteiles (2) aufweist,
**dadurch gekennzeichnet,**
**dass** das flächige Stützteil (2) einteilig ausgebildet ist, mehrere stegartige Flächenabschnitte (6, 6') aufweist und mehrere die Flächenebene durchdringende Durchbrüche (5, 5') aufweist, wobei mittels jeweils zweier zueinander benachbarter Durchbrüche (5, 5') jeweils mindestens einer der stegartigen Flächenabschnitte (6, 6') des Stützteiles (2) in der Flächenebene des Stützteiles (2) ausgebildet ist.

2. Stützvorrichtung nach Anspruch 1, **dadurch gekennzeichnet, dass** eine Vielzahl von Solltrennstellen (8, 8') in vorbestimmten stegartigen Flächenabschnitten (6, 6') des Stützteiles (2) vorgesehen sind.

3. Stützvorrichtung nach einem der Ansprüche 1 und 2, **dadurch gekennzeichnet, dass** mindestens einem stegartigen Flächenabschnitt (6, 6') mit einer Solltrennstelle (8, 8') wenigstens ein Ausdehnungsbegrenzer (9, 9') zugeordnet ist, dessen Enden zu beiden Seiten der Solltrennstelle (8, 8') mit dem Stützteil (2) verbunden sind.

4. Stützvorrichtung nach Anspruch 3, **dadurch gekennzeichnet, dass** der Ausdehnungsbegrenzer (9, 9') zumindest ein Abschnitt einer aus der Flächenebene des Stützteiles hervorstehende Sicke ausbildet, welche einstückig am flächigen Stützteil (2) angeordnet ist.

5. Stützvorrichtung nach einem der Ansprüche 1 bis 4, **dadurch gekennzeichnet, dass** die Befestigungsmittel (3, 3', 4, 4') einteilig mit dem Stützteil (2) ausgebildet sind.

6. Stützvorrichtung nach einem der Ansprüche 1 bis 5, **dadurch gekennzeichnet, dass** die Befestigungsmittel (3, 3', 4, 4') an gegenüberliegenden Längsrändern des Stützteiles (2) angeordnet sind.

7. Stützvorrichtung nach einem der Ansprüche 1 bis 6, **dadurch gekennzeichnet, dass** die Befestigungsmittel (3, 3', 4, 4') mit Verrastteilen für eine Formschlussverbindung (11) mit einem Rahmen (10) eines Sitzes ausgerüstet sind.

8. Stützvorrichtung nach einem der Ansprüche 1 bis 7, **dadurch gekennzeichnet, dass** der Werkstoff für das Stützteil (2) ein sortenreiner Kunststoff ist.

9. Sitz, insbesondere Fahrzeugsitz, mit zumindest einem Sitzkissen und einem Lehnenteil, wobei wenigstens das Sitzkissen oder das Lehnenteil mit wenigstens einem Polsterteil und einer das Polsterteil stützenden Stützvorrichtung (1) nach einem der vorhergehenden Ansprüche ausgerüstet sind.

## Claims

1. A supporting device for a seat, in particular a vehicle seat, comprising at least one planar supporting part (2) and multiple fastening means (3, 3', 4, 4') arranged on the supporting part (2), the supporting part (2) having at least one bridge-like surface section (6, 6'), and the supporting part (2) having at least one expansion region (7, 7') in the form of a predetermined breaking point (8, 8') in each bridge-like surface section (6, 6'), for the predetermined breaking point (8, 8') in question to yield in the orientation direction of the bridge-like surface section (6, 6') in question and thus for the supporting part (2) to expand in at least one direction in the surface plane of the supporting part (2),
**characterised in that**
the planar supporting part (2) is formed in one part, has multiple bridge-like surface sections (6, 6') and multiple holes (5, 5') running through the surface plane, wherein in each case at least one of the bridge-like surface sections (6, 6') of the supporting part (2) is formed in the surface plane of the supporting part (2) by means of two mutually adjacent holes (5, 5').

2. The supporting device according to Claim 1,
**characterised in that**
a plurality of predetermined breaking points (8, 8') is provided in predetermined bridge-like surface sections (6, 6') of the supporting part (2).

3. The supporting device according to one of Claims 1 and 2,
**characterised in that**
at least one bridge-like surface section (6, 6') with a predetermined breaking point (8, 8') is assigned at least one expansion limiter (9, 9'), the ends of which are connected to the supporting part (2) on both sides of the predetermined breaking point (8, 8').

4. The supporting device according to Claim 3,
**characterised in that**
the expansion limiter (9, 9') forms at least one section of a bead protruding from the surface plane of the supporting part, said bead being arranged integrally on the planar supporting part (2).

5. The supporting device according to any one of Claims 1 to 4,
**characterised in that**
the fastening means (3, 3', 4, 4') are formed integrally with the supporting part (2).

6. The supporting device according to any one of Claims 1 to 5,
**characterised in that**
the fastening means (3, 3', 4, 4') are arranged on opposing longitudinal edges of the supporting part (2) .

7. The supporting device according to any one of Claims 1 to 6,
**characterised in that**
the fastening means (3, 3', 4, 4') are provided with latching parts for interlocking connection (11) to a frame (10) of a seat.

8. The supporting device according to any one of Claims 1 to 7,
**characterised in that**
the material for the supporting part (2) is a homogeneous plastic.

9. A seat, in particular a vehicle seat, having at least one seat cushion and a backrest, wherein at least the seat cushion or the backrest is provided with at least one padded part and a supporting device (1) according to any one of the preceding claims supporting the padded part.

## Revendications

1. Dispositif de support pour un siège, en particulier un siège de véhicule, comprenant au moins une pièce de support (2) plane et plusieurs moyens de fixation (3, 3' ; 4, 4') disposés sur la pièce de support (2), sachant que la pièce de support (2) comporte au moins une section de surface (6, 6') de type membrure et sachant que la pièce de support (2) comporte au moins une zone d'expansion (7, 7') constituée comme point de séparation théorique (8, 8') dans une section de surface (6, 6') de type membrure respective pour un affaissement du point de séparation théorique respectif (8, 8') en direction de l'orientation de la section de surface respective de type membrure (6, 6') et de ce fait pour une expansion de la pièce de support (2) dans au moins une direction dans le plan de surface de la pièce de support (2),
**caractérisé en ce que**
la pièce de support plane (2) est constituée en une seule pièce, comporte plusieurs sections de surface de type membrure (6, 6') et comporte plusieurs passages (5, 5') traversant le plan de surface, sachant qu'au moyen respectivement des deux passages (5, 5') voisins l'un de l'autre au moins une des sections de surface de type membrure (6, 6') de la pièce de support (2) est respectivement constituée dans le plan de surface de la pièce de support (2).

2. Dispositif de support selon la revendication 1, **caractérisé en ce qu'**une pluralité de points de séparation théoriques (8, 8') est prévue dans les sections de surface (6, 6') de type membrure prédéterminées de la pièce de support (2).

3. Dispositif de support selon l'une quelconque des revendications 1 et 2, **caractérisé en ce qu'**au moins un limiteur d'expansion (9, 9') est attribué à au moins une section de surface (6, 6') de type membrure avec un point de séparation théorique (8, 8'), les extrémités dudit limiteur d'expansion étant reliées aux deux côtés du point de séparation théorique (8, 8') avec la pièce de support (2).

4. Dispositif de support selon la revendication 3, **caractérisé en ce que** le limiteur d'expansion (9, 9') constitue au moins une section d'une moulure ressortant du plan de surface de la pièce de support, laquelle est disposée en une seule pièce sur la pièce de support plane (2).

5. Dispositif de support selon l'une quelconque des revendications 1 à 4, **caractérisé en ce que** les moyens de fixation (3, 3' ; 4, 4') sont constitués en une seule pièce avec la pièce de support (2).

6. Dispositif de support selon l'une quelconque des revendications 1 à 5, **caractérisé en ce que** les moyens de fixation (3, 3' ; 4, 4') sont disposés sur des bords longitudinaux opposés de la pièce de support (2) .

7. Dispositif de support selon l'une quelconque des revendications 1 à 6, **caractérisé en ce que** les moyens de fixation (3, 3' ; 4, 4') sont équipés de parties encliquetables pour une liaison par conformité de forme (11) avec un cadre (10) d'un siège.

8. Dispositif de support selon l'une quelconque des revendications 1 à 7, **caractérisé en ce que** la matière pour la pièce de support (2) est une matière plastique de la pure espèce.

9. Siège, en particulier siège de véhicule, avec au moins un coussin de siège et une partie de dossier, sachant qu'au moins le coussin de siège ou la partie de dossier sont équipés d'au moins une partie de rembourrage et d'un dispositif de support (1) supportant la partie de rembourrage selon l'une quelconque des revendications précédentes.
